(19) Europäisches Patentamt
European Patent Office
Office européen des brevets

(11) Veröffentlichungsnummer: **0 137 934**
**B1**

# (12) EUROPÄISCHE PATENTSCHRIFT

(45) Veröffentlichungstag der Patentschrift: **25.01.89**

(51) Int. Cl.[4]: **C 08 F 10/00**, C 08 F 4/62

(21) Anmeldenummer: **84109097.0**

(22) Anmeldetag: **01.08.84**

(54) **Verfahren zum Herstellen von Polymerisaten des Ethylens mittels eines Kieselsäure-Xerogel/Chromtrioxid-Katalysators.**

(30) Priorität: **11.08.83 DE 3329016**

(43) Veröffentlichungstag der Anmeldung: **24.04.85 Patentblatt 85/17**

(45) Bekanntmachung des Hinweises auf die Patenterteilung: **25.01.89 Patentblatt 89/4**

(84) Benannte Vertragsstaaten: **AT BE DE FR GB IT NL**

(56) Entgegenhaltungen:
**DE-A-2 622 755**
**FR-A-1 352 996**
**US-A-4 037 042**

(73) Patentinhaber: **BASF Aktiengesellschaft, Carl-Bosch- Strasse 38, D-6700 Ludwigshafen (DE)**

(72) Erfinder: **Warzelhan, Volker, Dr., Suedtiroler Ring 32, D-6719 Weisenheim (DE)**
Erfinder: **Klaerner, Peter, Dr., Hauptstrasse 62, D-6719 Battenberg (DE)**
Erfinder: **Richter, Konrad, Dr., Kriemhildstrasse 58, D-6700 Ludwigshafen (DE)**
Erfinder: **Gruber, Wolfgang, Dr., Lorscher Ring 2 b, D-6710 Frankenthal (DE)**
Erfinder: **Gropper, Hans, Dr., Sternstrasse 155, D-6700 Ludwigshafen (DE)**
Erfinder: **Ball, Wolfgang, Dr., 0-6,9, D-6800 Mannheim 1 (DE)**

**EP 0 137 934 B1**

Anmerkung: Innerhalb von neun Monaten nach der Bekanntmachung des Hinweises auf die Erteilung des europäischen Patents im Europäischen Patentblatt kann jedermann beim Europäischen Patentamt gegen das erteilte europäische Patent Einspruch einlegen. Der Einspruch ist schriftlich einzureichen und zu begründen. Er gilt erst als eingelegt, wenn die Einspruchsgebühr entrichtet worden ist (Art. 99(1) Europäisches Patentübereinkommen).

LIBER, STOCKHOLM 1989

## Beschreibung

Die vorliegende Erfindung liegt im Rahmen eines Verfahrens zum Herstellen von Ethylen-Homopolymerisaten sowie Ethylen-Copolymerisaten mit untergeordneten Mengen an einpolymerisierten $C_3$- bis $C_{12}$-, insbesondere $C_3$- bis $C_8$-α-Monoolefinen durch Polymerisation des bzw. der Monomeren bei Temperaturen von 30 bis 150, insbesondere 60 bis 120°C und Drücken von 2 bis 150, insbesondere von 5 bis 60 bar, mittels eines Kieselsäure-Xerogel/ Chromtrioxid-Katalysators, der erhalten wird, wenn man

(1) zunächst ein feinteiliges Kieselsäure-Xerogel herstellt, indem man

(1.1) von einem 10 bis 25, vorzugsweise 12 bis 20 und insbesondere 14 bis 20 Gewichtsprozent Feststoff (berechnet als Siliciumdioxid) enthaltenden Kieselsäure-Hydrogel ausgeht, das weitgehend kugelförmig ist, einen Teilchendurchmesser im bereich von 1 bis 8, insbesondere 2 bis 6 mm hat und erhalten wird, indem man

(1.1.1) in einen unter Drall stehenden Strom einer wäßrigen Mineralsäure längs sowie tangential zum Strom eine Natrium- bzw. Kaliumwasserglaslösung einbringt,

(1.1.2) das dabei entstehende Kieselsäure-Hydrosol in ein gasförmiges Medium tropfenförmig versprüht,

(1.1.3) das versprühte Hydrosol in dem gasförmigen Medium zum Hydrogel erstarren läßt und

(1.1.4) das so erhaltene weitgehend kugelförmige Hydrogel ohne vorherige Alterung durch Waschen von Salzen befreit,

(1.2) aus dem Hydrogel (1.1) mittels einer organischen Flüssigkeit aus der Reihe der $C_1$- bis $C_4$-Alkanole und/oder $C_3$- bis $C_5$-Alkanone mindestens 60 %, insbesondere mindestens 90 % des in dem Hydrogel enthaltenen Wassers extrahiert,

(1.3) das dabei erhaltene entwässerte, mit der organischen Flüssigkeit behandelte Gel solange trocknet, bis bei 180°C unter einem Vakuum von 10/750 bar (10 Torr) während 30 Minuten kein Gewichtsverlust mehr auftritt (Xerogel-Bildung) und

(1.4) das so gewonnene Xerogel auf Teile mit einem Durchmesser von 20 bis 2000, insbesondere 40 bis 300 µm bringt,

(2) dann dieses Xerogel (1) aus einer 0,05- bis 5-gewichtsprozentigen Lösung von Chromtrioxid in einem $C_3$- bis $C_5$-Alkanon oder einer 0,05- bis 15-gewichtsprozentigen Lösung einer unter den Bedingungen der Stufe (3) in Chromtrioxid übergehenden Chromverbindung in einem $C_1$- bis $C_4$-Alkanol - wobei das jeweilige Lösungsmittel nicht mehr als 20, vorzugsweise nicht mehr als 5, Gewichtsprozent Wasser enthalten darf - heraus unter Verdampfen des Lösungsmittels mit der gewünschten Menge Chrom belädt und

(3) schließlich das hierbei resultierende Produkt (2) in einem wasserfreien, Sauerstoff in einer Konzentration von über 10 Volumenprozent enthaltenden Gasstrom 10 bis 1 000, insbesondere 60 bis 300 Minuten auf einer Temperatur von 400 bis 1 100, insbesondere 700 bis 950°C hält.

Polymerisationsverfahren dieser Art sind bekannt, wobei im gegebenen Zusammenhang als repräsentativ insbesondere das in der US-PS-4 037 042 beschriebene gelten kann.

Die genannte - in der Großtechnik mit Erfolg betriebene - Verfahrensart hat, ebenso wie in Parallele zu setzende andere Verfahrensarten, zum Kernstück einen in besonderer Weise ausgestalteten Chromtrioxid-Katalysator.

Die besonderen Ausgestaltungen der Chromtrioxid-Katalysatoren werden bekanntlich vorgenommen, um bestimmte Ziele zu erreichen, wie - u.a. - die folgenden:

(a) Katalysatoren, die eine erhöhte Ausbeute an Polymerisat zu liefern vermögen, nämlich Katalysatoren mit einer erhöhten Produktivität, d.h. solche, bei denen die Menge an gebildetem Polymerisat pro Gewichtseinheit des Katalysators erhöht ist.

(b) Katalysatoren, die Polymerisate zu liefern vermögen, die bei der Verarbeitung keinen oder nur einen relativ geringen Abfall des Schmelzindex' ("MI-Drop") aufweisen.

(c) Katalysatoren, die ihre positiven Wirkungen auch bei relativ niederen Temperaturen entfalten; - was z. B. für Trockenphasenpolymerisationen von Bedeutung sein kann.

(d) Katalysatoren, durch welche die morphologischen Eigenschaften der Polymerisate in bestimmter Weise beeinflußt werden, etwa im Sinne einer einheitlichen Korngröße und/oder eines hohen Schüttgewichtes; - was für die technische Beherrschung der Polymerisationssysteme, die Aufarbeitung der Polymerisate und/oder die Verarbeitbarkeit der Polymerisate von Bedeutung sein kann.

(e) Katalysatoren, die einfach und sicher herzustellen und gut handzuhaben sind.

(f) Katalysatoren, die es ermöglichen, bei Polymerisationen unter der Einwirkung von Molekulargewichtsreglern, wie Wasserstoff, die Molekulargewichte der Polymerisate besonders effektiv zu regeln.

(g) Katalysatoren, die es erlauben, Polymerisate mit besonders ausgeprägter Spannungsrißbeständigkeit zu erzeugen; - einer Eigenschaft, die z. B. besonders wichtig ist für Flüssigkeits-Behältnisse, namentlich Behältnisse, in denen aggresive Flüssigkeiten aufbewahrt werden sollen.

(h) Katalysatoren, die auf spezielle Polymerisationsverfahren zugeschnitten sind; - etwa solche, die z. B. entweder auf die spezifischen Besonderheiten der Suspensionspolymerisation oder auf die spezifischen Besonderheiten der Trockenphasenpolymerisation abgestimmt sind.

(i) Katalysatoren, mittels derer Polymerisate mit einerseits einer hohen Molmasse (Fertigteilfestigkeit) sowie andererseits einer problemlosen Verarbeitbarkeit erhalten werden können; - d.h. hochmolekulare Polymerisate, die sich auch bei relativ niederen Verarbeitungstemperaturen und/oder durch relativ schwache Verarbeitungskräfte relativ schnell zu einwandfreien Formteilen verarbeiten lassen.

(j) Katalysatoren, die zu Polymerisaten mit einer besonders hohen Steifigkeit führen; - einer Eigenschaft, die für viele Anwendungsgebiete erwünscht ist.

Nach den bisherigen Erfahrungen gibt es unter den mannigfachen Zielen etliche Ziele, die man durch besondere Ausgestaltungen der Chromtrioxid-Katalysatoren nur dann erreichen kann, wenn man andere Ziele zurücksetzt.

Hier setzt die Aufgabe an, die zur vorliegenden Erfindung geführt hat: Das gut bewährte Verfahren der eingangs definierten Art mit dem Chromtrioxid-Katalysator der dort definierten Art so weiterzubilden, daß die Zielvorgaben gemäß (a), (b), (c), (g) und (i) - als Gesamtkomplex gesehen - in besonders hohem Maße erreicht werden, ohne wesentliche Zurücksetzung der - wiederum als Gesamtkomplex betrachtet - Zielvorgaben gemäß (d) und (j).

Es wurde gefunden, daß diese Aufgabe gelöst werden kann, wenn man das in Rede stehende Verfahren unter zusätzlicher Mitverwendung eines Alumoxans als Cokatalysator durchführt.

Somit arbeitet das erfindungsgemäße Verfahren mit einer Katalysator-Komponente, wie sie gemäß der FR-A-1 352 996 eingesetzt wird, beim Herstellen von Ethylen-Polymerisaten mittels eines anderen Katalysatorsystems, nämlich eines Systems nach Ziegler, das als weitere Komponenten enthält (i) eine Übergangsmetallverbindung, die auf einem Metall der Gruppen IV A, V A bzw. VI A basiert, sowie (ii) einer metallorganischen Verbindung, die auf einem Metall der Gruppen I A, II A bzw. III B basiert. Da solche Ziegler-Systeme gegenüber Phillips-Katalysatoren - d.h. Kieselsäure-Xerogel/Chromtrioxid-Katalysatoren, wie sie Gegenstand der vorliegenden Erfindung sind - bekanntlich sowohl in ihren Wirkungsmechanismen als auch in ihrem Polymerisationsergebnis grundlegend verschieden sind, ist im Rahmen der vorliegenden Erfindung weder hinsichtlich der Aufgabenstellung noch hinsichtlich der Aufgabenlösung eine Lehre oder Folgerung aus der FR-A-1 352 996 zu ziehen.

Gegenstand der vorliegenden Erfindung ist ein Verfahren zum Herstellen von Ethylen-Homopolymerisaten sowie Ethylen-Copolymerisaten mit untergeordneten Mengen an einpolymerisierten $C_3$- bis $C_{12}$-, insbesondere $C_3$- bis $C_8$-α-Monoolefinen durch Polymerisation des bzw. der Monomeren bei Temperaturen von 30 bis 150, insbesondere 60 bis 120°C und Drücken von 2 bis 150, insbesondere von 5 bis 60 bar, mittels eines Kieselsäure-Xerogel/Chromtrioxid-Katalysators, der erhalten wird, wenn man

(1) zunächst ein feinteiliges Kieselsäure-Xerogel herstellt, indem man

(1.1) von einem 10 bis 25, vorzugsweise 12 bis 20 und insbesondere 14 bis 20 Gewichtsprozent Feststoff (berechnet als Siliciumdioxid) enthaltenden Kieselsäure-Hydrogel ausgeht, das weitgehend kugelförmig ist, einen Teilchendurchmesser im bereich von 1 bis 8, insbesondere 2 bis 6 mm hat und erhalten wird, indem man

(1.1.1) in einen unter Drall stehenden Strom einer wäßrigen Mineralsäure längs sowie tangential zum Strom eine Natrium- bzw. Kaliumwasserglaslösung einbringt,

(1.1.2) das dabei entstehende Kieselsäure-Hydrosol in ein gasförmiges Medium tropfenförmig versprüht,

(1.1.3) das versprühte Hydrosol in dem gasförmigen Medium zum Hydrogel erstarren läßt und

(1.1.4) das so erhaltene weitgehend kugelförmige Hydrogel ohne vorherige Alterung durch Waschen von Salzen befreit,

(1.2) aus dem Hydrogel (1.1) mittels einer organischen Flüssigkeit aus der Reihe der $C_1$- bis $C_4$-Alkanole und/oder $C_3$- bis $C_5$-Alkanone mindestens 60 %, insbesondere mindestens 90 % des in dem Hydrogel enthaltenen Wassers extrahiert,

(1.3) das dabei erhaltene entwässerte, mit der organischen Flüssigkeit behandelte Gel solange trocknet, bis bei 180°C unter einem Vakuum von 10/750 bar (10 Torr) während 30 Minuten kein Gewichtsverlust mehr auftritt (Xerogel-Bildung) und

(1.4) das so gewonnene Xerogel auf Teile mit einem Durchmesser von 20 bis 2000, insbesondere 40 bis 300 μm bringt,

(2) dann dieses Xerogel (1) aus einer 0,05- bis 5-gewichtsprozentigen Lösung von Chromtrioxid in einem $C_3$- bis $C_5$-Alkanon oder einer 0,05- bis 15-gewichtsprozentigen Lösung einer unter den Bedingungen der Stufe (3) in Chromtrioxid übergehenden Chromverbindung in einem $C_1$- bis $C_4$-Alkanol - wobei das jeweilige Lösungsmittel nicht mehr als 20, vorzugsweise nicht mehr als 5, Gewichtsprozent Wasser enthalten darf - heraus unter Verdampfen des Lösungsmittels mit der gewünschten Menge Chrom belädt und

(3) schließlich das hierbei resultierende Produkt (2) in einem wasserfreien, Sauerstoff in einer Konzentration von über 10 Volumenprozent enthaltenden Gasstrom 10 bis 1 000, insbesondere 60 bis 300 minuten auf einer Temperatur von 400 bis 1 100, insbesondere 700 bis 950°C hält.

Das erfindungsgemäße Verfahren ist dadurch gekennzeichnet, daß zusätzlich zum Katalysator ein Cokatalysator eingesetzt wird, der besteht aus einem - vorzugsweise - offenkettigen oder - auch - ringgeschlossenen Alumoxan der Formel

$R_2AlO[RAlO]_mAlR_2$ bzw. $[RAlO]_n$

worin stehen

| | |
|---|---|
| R | für eine $C_1$- bis $C_{12}$-Alkylgruppe, insbesondere $C_1$- bis $C_6$- Alkylgruppe, vor allem die i-Butylgruppe, |
| m | für eine Zahl von 0 bis 50, vorzugsweise 0 bis 20 und insbesondere 0 bis 10, und |
| n | für eine Zahl von 2 bis 20, insbesondere 3 bis 10, |

mit der Maßgabe, daß das Atomverhältnis Chrom in dem Katalysator Aluminium in dem Cokatalysator 1 : 1 bis 1 : 300, vorzugsweise 1 : 1 bis 1 : 100, und insbesondere 1 : 1 bis 1 : 50 beträgt.

Zur Herstellung des beim erfindungsgemäßen Verfahren einzusetzenden Katalysators ist im einzelnen das Folgende zu sagen:

(1) Erste Stufe

(1.1) Charakteristisch für diese Stufe ist, daß ein Kieselsäure-Hydrogel eingesetzt wird, das einen relativ hohen Feststoffgehalt hat, weitgehend kugelförmig ist und - insbesondere - auf eine spezielle Weise hergestellt worden ist. Diese spezielle Weise der Herstellung ist in ihren Unterstufen (1.1.1), (1.1.2) sowie (1.1.3) im einzelnen beschrieben, z. B. in der US-PS-3 872 217; eine Beschreibung der gleichen Unterstufen und zusätzlich der Unterstufe (1.1.4) findet sich z. B. in der US-PS-4 037 042.

(1.2) Die Extraktion des Wassers aus dem Kieselsäure-Hydrogel mittels der oben bezeichneten organischen Flüssigkeit kann in üblichen Extraktionsvorrichtungen erfolgen. Geeignete Vorrichtungen sind z. B. Säulenextraktoren. Als organische Flüssigkeiten haben sich aus der Reihe der Alkanole die folgenden (nach abnehmender Wirksamkeit - nicht jedoch nach abnehmender Wirtschaftlichkeit - geordnet) bewährt: tert.-Butanol, i-Propanol, Ethanol und Methanol. Aus der Reihe der Alkanone die insgesamt gegenüber den Alkanolen zu bevorzugen sind hat sich vor allem Aceton bewährt. Es versteht sich von selbst, daß die organische Flüssigkeit aus einem oder mehreren der in Betracht kommenden Individuen bestehen kann, wobei in jedem Fall die Flüssigkeit vor dem Extrahieren weniger als 5 und vorzugsweise weniger als 3 Gewichtsprozent Wasser enthalten sollte.

(1.3) Die Überführung des mit der organischen Flüssigkeit behandelten Gels in das Xerogel (Trocknung) kann wiederum in einschlägig üblichen Trocknungsvorrichtungen erfolgen. Dabei erhält man die besten Ergebnisse, wenn man bei Produkttemperaturen von 80 bis 200°C und Drücken von 1/750 bis 250/750 bar (1 bis 250 Torr) trocknet, wobei man - aus Gründen des Dampfdruckes - einer steigenden Temperatur auch einen steigenden Druck zuordnen sollte et vice versa. Durch strömende Schleppgase, etwa Stickstoff, kann der Trocknungsvorgang - insbesondere bei relativ hohen Drücken - beschleunigt werden.

(1.4) Das Gewinnen von Xerogel-Teilchen mit einem bestimmten Durchmesser ist an sich mit keiner Besonderheit verbunden. Es kann z. B. in einfacher Weise erfolgen, indem man das aus Stufe (1.3) erhaltene Produkt mahlt und durch Sieben fraktioniert.

(2) Zweite Stufe

Beim Beladen des Xerogels mit der Chromkomponente kann man zweckmäßigerweise so verfahren, daß man das Xerogel in einer Lösung von Chromtrioxid oder einer unter den Bedingungen der Stufe (3) in Chromtrioxid übergehenden Chromverbindung suspendiert (wobei die Mengen so gewählt werden, daß das gewünschte Mengenverhältnis Xerogel : Chrom sich ergibt) und unter dauernder, möglichst homogener Durchmischung des Ansatzes dessen flüssige bestandteile - also Alkanon bzw. Alkanol sowie gegebenenfalls Wasser - abdampft. Hierbei ist es am zweckmäßigsten, bei Temperaturen von 20 bis 150°C und Drücken von 10/750 bis 760/750 bar (10 bis 760 Torr) zu arbeiten. Nicht kritisch ist, wenn das mit der Chromkomponente beladene Xerogel noch eine gewisse Restfeuchte enthält (flüchtige Bestandteile nicht mehr als 20, insbesondere nicht mehr als 10 Gewichtsprozent, bezogen auf das Xerogel). - Im gegebenen Zusammenhang geeignete Chromkomponenten sind vor allem Chromtrioxid sowie Chromhydroxid, ferner lösliche Salze des dreiwertigen Chroms mit einer organischen oder anorganischen Säure, wie Acetat, Oxalat, Sulfat, Nitrat; besonders geeignet sind solche Salze derartiger Säuren, die beim Aktivieren rückstandsfrei in Chromtrioxid übergehen. Auch können Chromverbindungen in Form von Chelaten eingesetzt werden, wie Chromacetylacetonat.

(3) Dritte Stufe

Diese Stufe dient der Aktivierung des Katalysators; sie kann in einschlägig üblicher - aus Literatur und Praxis wohlbekannter - Weise durchgeführt werden, d.h. insbesondere unter Bedingungen, die gewährleisten, daß im fertigen Katalysator das Chrom - zumindest teilweise - nicht in einen anderen als dem sechswertigen Zustand vorliegt.

Kennzeichnendes Merkmal des erfindungsgemäßen Verfahrens ist, daß der im Vorstehenden beschriebene und an sich bekannte Chromtrioxid-Katalysator unter zusätzlicher Mitverwendung eines Alumoxans der oben näher definierten Formeln als Cokatalysator eingesetzt wird.

Namentliche Beispiele für geeignete Cokatalysatoren der bezeichneten Art sind: Tetraisobutyldialumoxan, Pentaisobutyltrialumoxan und Hexaisobutyltetraalumoxan als offenkettige Vertreter sowie Triisobutyltrialumoxan, Tetraisobutyltetraalumoxan und Pentaisobutylpentaalumoxan als ringgeschlossene Vertreter.

Zu dem erfindungsgemäßen Verfahren als Ganzem ist schließlich das Folgende zu bemerken:

Das Polymerisationsverfahren als solches kann - unter Beachtung der kennzeichnenden Besonderheit - in praktisch allen einschlägig üblichen technologischen Ausgestaltungen durchgeführt werden, etwa als diskontinuierliches, taktweises oder kontinuierliches Verfahren, sei es z. B. als Suspensions-Polymerisationsverfahren, Lösungs-Polymerisationsverfahren oder Trockenphasen-Polymerisationsverfahren; - wobei es allerdings im erstgenannten Fall die größten Vorteile bringt. Die erwähnten technologischen Ausgestaltungen - mit anderen Worten: die technologischen Varianten der Polymerisation von Olefinen nach Phillips - sind aus der Literatur und Praxis wohlbekannt, so dass sich nähere Ausführungen zu ihnen erübrigen. Zu bemerken ist allenfalls noch, daß die Katalysatoren außerhalb oder innerhalb des Polymerisationsgefäßes mit den Cokatalysatoren zusammengebracht werden können; im letztgenannten Fall etwa durch räumlich getrennten Eintrag der Komponenten, die im übrigen in Form einer Suspension (Katalysator) bzw. Losung (Cokatalysator) gehandhabt werden können.

Des weiteren ist noch zu sagen, daß sich das neue Verfahren vornehmlich zum Herstellen von Homopolymerisaten des Ethylens anbietet. Im Falle des Herstellens von Copolymerisaten des Ethylens mit $\alpha$-Monoolefinen kommen vor allem Propen, Buten-1, Hexen-1 und Okten-1 als $\alpha$-Monoolefine in Betracht. Die Mitvervendung von Molekulargewichtsreglern, wie insbesondere Wasserstoff, ist beim erfindungsgemäßen Verfahren mit gutem Erfolg möglich.

**Beispiel**

Herstellung des Kieselsäure-Xerogels

Es wurde eine in der Figur US-PS-3 872 217 dargestellte Mischdüse mit folgenden Daten benutzt: Der Durchmesser der zylindrischen, aus einem Kunststoffschlauch gebildeten Mischkammern betrug 14 mm, die Mischraumlänge (einschließlich Nachmischstrecke) 350 mm. Nahe der stirnseitig verschlossenen Eintrittsseite der mischkammer war eine tangentiale Einlaufbohrung von 4 mm Durchmesser für die Mineralsäure angebracht. Es schlossen sich vier weitere Bohrungen mit ebenfalls 4 mm Durchmesser und gleicher Einlaufrichtung für die Wasserglaslösung an, wobei der Abstand der Bohrungen voneinander, in Längsrichtung der Mischkammer gemessen, 30 mm betrug. Für die primäre Mischzone war demnach das Verhältnis von Länge zu Durchmesser etwa gleich 10. Für die sich anschließende sekundäre Mischzone lag dieses Verhältnis bei 15. Als Spritzmundstück wurde ein flachgedrücktes, leicht nierenförmig ausgebildetes Rohrstück über das Austrittsende des Kunststoffschlauches geschoben.

Beschickt wurde diese Mischvorrichtung mit 325 l/h 33-gewichtsprozentiger Schwefelsäure von 20°C mit einem Betriebsdruck von ca. 3 bar sowie 1 100 l/h Wasserglaslösung (hergestellt aus technischem Wasserglas mit 27 Gewichtsprozent $SiO_2$ und 8 Gewichtsprozent $Na_2O$ durch Verdünnung mit Wasser) mit einem Litergewicht von 1,20 kg/l und einer Temperatur von ebenfalls 20°C mit einem Druck von ebenfalls ca. 3 bar. In der mit dem Kunststoff schlauch ausgekleideten Mischkammer wurde durch fortschreitende Neutralisation ein unbeständiges Hydrosol mit einem pH-Wert zwischen 7 und 8 gebildet, das bis zur vollständigen Homogenisierung noch etwa 0,1 Sekunden in der Nachmischzone verblieb, bevor es durch das Düsenmundstück als fächerförmiger Flüssigkeitsstrahl in die Atmosphäre gespritzt wurde. Der Strahl zerteilte sich während des Fluges durch die Luft in einzelne Tropfen, die infolge der Oberflächenspannung in eine weitgehend kugelige Form übergingen und die noch während ihres Fluges innerhalb ca. einer Sekunde zu Hydrogel-Kugeln erstarrten. Die Kugeln hatten eine glatte Oberfläche, waren glasklar, enthielten etwa 17 Gewichtsprozent $SiO_2$ und hatten folgende Kornverteilung:

| | |
|---|---|
| > 8 mm | 10 Gewichtsprozent |
| 6 - 8 mm | 45 Gewichtsprozent |
| 4 - 6 mm | 34 Gewichtsprozent |
| <4 mm | 11 Gewichtsprozent. |

Die Hydrogel-Kugeln wurden am Ende ihres Fluges in einem Waschturm aufgefangen, der nahezu vollständig mit Hydrogel-Kugeln gefüllt war, und in dem die Kugeln sofort ohne Alterung mit ca. 50°C warmem, schwach ammoniakalischem Wasser in einem kontinuierlich verlaufenden Gegenstromprozeß salzfrei gewaschen wurden.

Durch Sieben isolierte man die Kugeln, die einen Durchmesser im Bereich von 2 bis 6 mm hatten und füllte 112 kg dieser Kugeln in ein Extraktionsfaß mit Zulauf an der Oberseite, einem Siebboden und einem schwanenhalsförmigen Überlauf, welcher an der Faßunterseite angeschlossen war und den Flüssigkeitsstand im Faß so hoch hielt, daß die Hydrogel-Kugeln vollkommen mit Flüssigkeit bedeckt waren. Dann ließ man solange Ethanol mit einer Geschwindigkeit von 60 l/h zulaufen, bis die Dichte des am Überlauf austretenden Ethanol-Wassergemisches bis 0,826 g/cm$^3$ gesunken war; es waren dann etwa 95 % des in dem Hydrogel enthaltenen Wassers extrahiert.

Die dabei erhaltenen Kugeln wurden bei 180°C unter einem Vakuum von 10/750 bar (10 Torr) 8 Stunden lang getrocknet; es trat dann unter den genannten Bedingungen während 30 Minuten kein Gewichtsverlust mehr auf.

Anschließend wurden die getrockneten Kugeln gemahlen und durch Sieben die Xerogel-Teile isoliert, die Durchmesser von 100 bis 200 µm hatten.

Herstellung des Katalysators

15 kg des oben beschriebenen Xerogels und 40 Liter einer etwa 1-gewichtsprozentigen Lösung von Chromtrioxid in Aceton wurden in einen Doppelkonusmischer gefüllt. Unter Rotation des von außen mit Dampf auf 110°C beheizten mischers wurde dann im Wasserstrahlvakuum das Aceton abdestilliert.

Das dabei resultierende Produkt wurde in einem Fließbett, welches von Luft durchströmt wurde, für 4 Stunden auf eine Temperatur von 870°C erhitzt und dann wieder abgekühlt. Ab 140°C wurde das Fließbett von Stickstoff durchspült, um Sauerstoffspuren (die bei der Polymerisation stören) zu beseitigen.

Der so gewonnene Katalysator hatte einen analytisch ermittelten Chromgehalt von rund 0,0002 mol/g.

Polymerisation

Es wurde gearbeitet in einem 10-l-Druckautoklaven. Dieser wurde auf 105°C aufgeheizt und mehrmals mit Ethylen gespült. Unter Rühren wurden dann 5 l i-Butan, denen 0,79 ml einer 20-gewichtsprozentigen Lösung von Tetraisobutyldialuminoxan in n-Heptan zugefügt worden war, eingebracht. Nach Erreichen der gewünschten Reaktionstemperatur von 105°C wurden 250 mg des oben beschriebenen Katalysators mittels Stickstoff so eingeschossen, daß der Druck im Autoklaven vor der Ethylenzugabe 25 bar betrug. Das gewählte Atomverhältnis von Chrom im Katalysator zu Aluminium im Cokatalysator entsprach demnach 1 : 15.

Sodann wurde schrittweise Ethylen bis zu einem Gesamtdruck von 41 bar aufgepreßt und bei konstanter Reaktionstemperatur entsprechend dem Fortschreiten der Polymerisation im Druckintervall 39 bis 41 bar nachgepreßt. Die Polymerisation wurde nach einer Reaktionszeit von 112 Minuten durch Entspannen abgebrochen.

Es wurden 1 920 g grießförmiges Polyethylen erhalten, entsprechend einer Produktivität von 7 680 g Polyethylen/g Katalysator.

Das Polyethylen hatte die folgenden Kenndaten:

Schmelzindex (MFI 190°C/10,0/1,02 N (10,0 Kp), nach DIN 53 735) 2,0 g/10 min

(Beim Granulieren des Materials unter einschlägig üblichen Bedingungen mittels eines Granulier-Extruders bei einer maximalen Massetemperatur von 210°C verringerte sich dieser Wert um 4 %)

| | |
|---|---|
| Schüttgewicht (nach DIN 53 468) | = 280 g/l |
| Spannungsrißbeständigkeit (ESCR (h), nach ASTM D-1693-70) | = 35 h |
| Grenzviskosität (nach DIN 53 728) | = 3,0 dl/g |
| HL-Schmelzindex (HLMFI 190°C/21,6/1,02 N (21,6 Kp), nach DIN 53 735 | = 13,6 g/10 min |
| Schubmodul G (nach DIN 53 445) | = 900 N/mm$^2$. |

Vergleichsversuch

Es wurde in Identität zum Beispiel (auch hinsichtlich der Messung der Kenndaten) gearbeitet, mit der einzigen Ausnahme, daß kein Cokatalysator eingesetzt wurde.

Auf diese Weise entstanden 500 g Polyethylen.

Dessen Kenndaten waren die folgenden:

Schmelzindex = 6,14 g/10 min

(Beim Granulieren verringerte sich dieser Wert um 22 %)

| | |
|---|---|
| Schüttgewicht | =290 g/l |
| Spannungsrißbeständigkeit | = 20 h |
| Grenzviskosität | = 2,3 dl/g |
| HL-Schmelzindex | = 34,5 g/10 min |
| Schubmodul G | = 910 N/mm². |

**Patentanspruch**

Verfahren zum Herstellen von Ethylen-Homopolymerisaten sowie Ethylen-Copolymerisaten mit untergeordneten Mengen an einpolymerisierten $C_3$- bis $C_{12}$-Monoolefinen durch Polymerisation des bzw. der Monomeren bei Temperaturen von 30 bis 150°C und Drücken von 2 bis 150 bar, mittels eines Kieselsäure-Xerogel/Chromtrioxid-Katalysators, der erhalten wird, wenn man

(1) zunächst ein feinteiliges Kieselsäure-Xerogel herstellt, indem man
(1.1) von einem 10 bis 25, Gewichtsprozent Feststoff (berechnet als Siliciumdioxid) enthaltenden Kieselsäure-Hydrogel ausgeht, das weitgehend kugelförmig ist, einen Teilchendurchmesser im Bereich von 1 bis 8 mm hat und erhalten wird, indem man
(1.1.1) in einen unter Drall stehenden Strom einer wäßrigen Mineralsäure längs sowie tangential zum Strom eine Natrium- bzw. Kaliumwasserglaslösung einbringt,
(1.1.2) das dabei entstehende Kieselsäure-Hydrosol in ein gasförmiges Medium tropfenförmig versprüht,
(1.1.3) das versprühte Hydrosol in dem gasförmigen Medium zum Hydrogel erstarren läßt und
(1.1.4) das so erhaltene weitgehend kugelförmige Hydrogel ohne vorherige Alterung durch Waschen von Salzen befreit,
(1.2) aus dem Hydrogel (1.1) mittels einer organischen Flüssigkeit aus der Reihe der $C_1$- bis $C_4$-Alkanole und/oder $C_3$ bis $C_5$-Alkanone mindestens 60 % des in dem Hydrogel enthaltenen Wassers extrahiert,
(1.3) das dabei erhaltene entwässerte, mit der organischen Flüssigkeit behandelte Gel solange trocknet, bis bei 180°C unter einem Vakuum von 10/750 bar( 10 Torr) während 30 Minuten kein Gewichtsverlust mehr auftritt (Xerogel-Bildung) und
(1.4) das so gewonnene Xerogel auf Teile mit einem Durchmesser von 20 bis 2000 µm bringt,
(2) dann dieses Xerogel (1) aus einer 0,05- bis 5-gewichtsprozentigen Lösung von Chromtrioxid in einem $C_3$- bis $C_5$-Alkanon oder einer 0,05- bis 15-gewichtsprozentigen Lösung einer unter den Bedingungen der Stufe (3) in Chromtrioxid übergehenden Chromverbindung in einem $C_1$- bis $C_4$-Alkanol - wobei das jeweilige Lösungsmittel nicht mehr als 20 Gewichtsprozent Wasser enthalten darf - heraus unter Verdampfen des Lösungsmittels mit der gewünschten Menge Chrom belädt und
(3) schließlich das hierbei resultierende Produkt (2) in einem wasserfreien, Sauerstoff in einer Konzentration von über 10 Volumenprozent enthaltenden Gasstrom 10 bis 1 000 Minuten auf einer Temperatur von 400 bis 1 100°C hält,

dadurch gekennzeichnet, daß zusätzlich zum Katalysator ein Cokatalysator eingesetzt wird, der besteht aus einem offenkettigen oder ringgeschlossenen Alumoxan der Formel

$R_2AlO[RAlO]_mAlR_2$ bzw. $[RAlO]_n$

worin stehen
R für eine $C_1$- bis $C_{12}$-Alkylgruppe,
m für eine Zahl von 0 bis 50, und
n für eine Zahl von 2 bis 20,
mit der Maßgabe, daß das Atomverhältnis Chrom in dem Katalysator : Aluminium in dem Cokatalysator 1 : 1 bis 1 : 300 beträgt.

**Claim**

1. A process for the preparation of an ethylene homopolymer or an ethylene copolymer containing minor amounts of copolymerized $C_3$-$C_{12}$-α-monoolefins by polymerization of the monomer or monomers at from 30 to 150°C, and under from 2 to 150 bar, using a silica xerogel/chromium trioxide catalyst which is obtained when

(1) a finely divided silica xerogel is first prepared by a method in which
(1.1) a silica hydrogel which contains from 10 to 25 percent by weight of solid (calculated as silicon

dioxide), is substantially spherical and has a particle diameter of from 1 to 8 mm is employed as a starting material, this hydrogel being obtained by a method in which

(1.1.1) a sodium or potassium waterglass solution is introduced into a stream of an aqueous mineral acid subjected to angular momentum, the introduction being effected both longitudinally and tangentially with respect to the stream,

(1.1.2) the resulting silica hydrosol is sprayed in the form of drops into a gaseous medium,

(1.1.3) the atomized hydrosol is allowed to solidify in the gaseous medium to give a hydrogel, and

(1.14) the resulting, substantially spherical hydrogel is freed from salts by washing, without prior aging,

(1.2) not less than 60 % of the water present in the hydrogel (1.1) is extracted using an organic liquid from the series consisting of the $C_1$-$C_4$-alkanols and/or $C_3$-$C_5$-alkanones,

(1.3) the resulting gel which has been dewatered and has been treated with the organic liquid is dried until no further weight loss occurs in the course of 30 minutes at 180°C under a reduced pressure of 10/750 bar (10 mm Hg) (xerogel formation), and

(1.4) the xerogel thus obtained is converted to particles having a diameter of from 20 to 2,000 µm,

(2) this xerogel (1) is then loaded with the desired amount of chromium from a 0.05 - 5 percent strength by weight solution of chromium trioxide in a $C_3$-$C_5$-alkanone or from a 0.05 - 15 percent strength by weight solution, in a $C_1$-$C_4$-alkanol, of a chromium compound which is converted to chromium trioxide under the conditions of stage (3), the particular solvent being permitted to contain no more than 20 percent by weight of water and being evaporated during the procedure, and

(3) the resulting product (2) is finally kept in an anhydrous stream of gas containing more than 10 vol percent of oxygen for from 10 to 1,000 minutes at from 400 to 1,100°C,

wherein, in addition to the catalyst, a co-catalyst is employed which consists of an open-chain or cyclic alumoxane of the formula

$R_2AlO[RAlO]_mAlR_2$ or $[RAlO]_n$

respectively, there R is $C_1$-$C_{12}$-alkyl, m is from 0 to 50 and n is from 2 to 20, with the proviso that the atomic ratio of chromium in the catalyst to aluminum in the cocatalyst is from 1 : 1 to 1 : 300.

**Revendication**

1. Procédé de préparation d'homopolymères d'éthylène ainsi que de copolymères d'éthylène avec de faibles quantités d'-monooléfines en $C_3$-$C_{12}$ par polymérisation du ou des monomères à des températures de 30 à 1500°C et des pressions de 2 à 150 bars, à l'aide d'un catalyseur xérogel d'acide silicique/trioxyde de chrome, qui est obtenu quand

1) on prépare d'abord un xérogel d'acide silicique finement divisé, du fait que

1.1) on part d'un hydrogel d'acide silicique contenant 10 à 25 % en poids de matières solides (calculées en dioxyde de silicium), qui est largement sphérique, a un diamètre de paticules compris entre 1 et 8 mm et qui a été obtenu

1.1.1) en introduisant dans un courant en rotation un acide minéral aqueux longitudinalement ainsi qu'une solution d'orthosilicate de sodium ou de potassium tangentiellement au courant,

1.1.2) en pulvérisant sous forme de gouttelettes l'hydrosol d'acide silicique ainsi formé dans un milieu gazeux,

1.1.3) en laissant l'hydrosol pulvérisé se solidifier en hydrogel dans le milieu gazeux, et

1.1.4) en débarrassant des sels, par lavage, l'hydrogel largement sphérique ainsi obtenu, sans vieillissement préalable,

1.2) on extrait de l'hydrogel 1.1) au moins 60 % de l'eau contenue dans l'hydrogel à l'aide d'un liquide organique choisi parmi les alcanols on $C_1$-$C_4$ ot/ou les alcanones en $C_3$-$C_5$,

1.3) on sèche le gel traité par le liquide organique concentré ainsi obtenu jusqu'à ce qu'il ne se produise plus pendant 30 minutes, à 180°C, sous un vide de 10/750 bar (10 Torr), de perte de poids (formation du xérogel) et

1.4) on réduit le xérogel ainsi obtenu en particules de diamètre de 20 à 2000 µm,

2) puis on charge ce xérogel (1) avec les quantités voulues de chrome, par évaporation du solvant d'une solution à 0,05 - 5 % en poids de trioxyde de chrome dans une alcanone en $C_3$-$C_5$ ou d'une solution à 0,05 - 15 % en poids d'un composé du chrome qui se transforme en trioxyde de chrome dans les conditions de l'étape 3) dans un alcanol en $C_1$-$C_4$, le milieu solvant respectif ne devant pas contenir plus de 20 % en poids d'eau, et

3) finalement on maintient le produit ainsi obtenu (2) dans un courant gazeux anhydre contenant de l'oxygène à une concentration de plus de 10 % en volume pendant 10 à 1000 minutes à une température de 400 à 1100°C,

caractérisé en ce que, en plus du catalyseur, on introduit un cocatalyseur qui consiste en un alumoxane à chaîne droite ou fermée de formule

$R_2AlO[RAlO]_mAlR_2$ ou $[RAlO]_n$

dans laquelle
R est mis pour un groupement alkyle en $C_1$-$C_{12}$,
m est mis pour un nombre de 0 à 50,
n est mis pour un nombre de 2 à 20,
avec la condition que le rapport atomique du chrome dans le catalyseur et de l'aluminium dans le cocatalyseur soit de 1 : 1 à 1 : 300.